# EUROPÄISCHE PATENTSCHRIFT

(11) **EP 0 950 206 B1**
(45) Veröffentlichungstag und Bekanntmachung des Hinweises auf die Patenterteilung: **23.07.2003**
(21) Anmeldenummer: 97952751.2
(22) Anmeldetag: 23.12.1997
(51) Int. Cl.: G02B 21/00

(54) **MIKROSKOP**
MICROSCOPE
MICROSCOPE

(30) Priorität: 24.12.1996 DE 19654208
(43) Veröffentlichungstag der Anmeldung: 20.10.1999
(73) Patentinhaber: Leica Microsystems Heidelberg GmbH, 69120 Heidelberg (DE)
(72) Erfinder: ULRICH, Heinrich, D-69121 Heidelberg (DE); ENGELHARDT, Johann, D-76669 Bad Schönborn (DE)
(74) Vertreter: Stamer, Harald
(86) Internationale Anmeldenummer: DE9703015
(87) Internationale Veröffentlichungsnummer: WO98028647

(56) Entgegenhaltungen:
- EP-A- 0 464 236
- WO-A-94/08425
- JP-A- 8 238 324
- US-A- 4 181 436
- US-A- 5 682 245

## Beschreibung

Die Erfindung betrifft ein konfokales Scanmikroskop.

Mikroskope herkömmlicher Art, aber auch konfokale Scanmikroskope sind seit Jahren aus der Praxis bekannt, so dass sich eine konkrete Beschreibung dieser Mikroskope hier erübrigt. Im konfokalen Scanmikroskop ist durch die Strahlscanrichtung eine Vorzugsrichtung für die Messung bzw. Abtastung gegeben. Da jedoch komplizierte Strukturen - wie moderne Halbleiterdesigns - zunehmend nicht rechtwinklige Strukturen aufweisen, ist es für deren Vermessung - im industriellen Bereich - erforderlich, diese Strukturen bzw. das so gestaltete Objekt relativ zum Scanstrahl zu drehen.

Des weiteren kann es für Meßzwecke grundsätzlich erforderlich sein, eine Drehung des Objekts vorzunehmen, um beispielsweise beliebige Gefügestrukturen mit vorgegebenen Strukturmustern im Rahmen der quantitativen Gefügeanalyse vergleichen zu können. Jedenfalls besteht in den unterschiedlichsten Anwendungsgebieten ein grundsätzlicher Bedarf, das Bild beliebig drehen zu können, wozu bislang eine Rotation des Objekts erforderlich ist.

Bei der Drehung des Objektes um einen willkürlichen Punkt muss das Objekt einerseits gedreht und andererseits derart verschoben werden, dass dieser beliebige Punkt im Drehpunkt des Objekts liegt, nämlich um den Bildmittelpunkt zu erhalten. Das Drehen und ggf. gleichzeitige Verschieben des Objekts führt jedoch zu einer komplexen Bewegung, die einen erheblichen Einstellaufwand mit sich bringt.

Für sich gesehen ist aus WO-A1-94/08425 eine Vorrichtung und ein Verfahren zur Projektion von Bildern zur Nutzung in der Fernseh- oder Videotechnik bekannt, wonach bei Bildprojektionen Rotationen zur Kompensation horizontaler Bewegungen vorgenommen werden.

Der vorliegenden Erfindung liegt daher die Aufgabe zugrunde, ein konfakales Scanmikroskop derart auszugestalten und weiterzubilden, dass die Vermessung eines Objekts aus mehreren Winkelpositionen heraus unter Vermeidung eines Drehens des zu vermessenden Objektes möglich ist.

Das erfindungsgemäße konfokale Scanmikroskop löst die voranstehende Aufgabe durch die Merkmale des Patentanspruchs 1.

Erfindungsgemäß wird bei konfokalen Scanmikroskopen der hier in Rede stehenden Art davon abgegangen, zur Vermessung des Objekts in unterschiedlichen Strahlwinkeln das Objekt selbst zu drehen oder dabei gleichzeitig zu verschieben. Vielmehr wird nunmehr eine optische Drehung vorgenommen, nämlich durch eine im Strahlengang des konfokalen Scanmikroskops vorgesehene optische Anordnung zur Bildrotation, so dass das Objekt selbst unverändert positioniert bleibt. Eine abermalige Einstellung bzw. Kalibrierung des Objekts ist somit nicht mehr erforderlich.

Bei der optischen Anordnung zur Bildrotation kann es sich beispielsweise um ein Prisma unterschiedlichster Bauart handeln, so beispielsweise um ein Dove-Prisma oder um ein Abbe-Prisma. Weitere geeignete Prismen lassen sich hierzu verwenden, wobei dabei wesentlich ist, dass das Prisma als quasi monolithischer Baustein zur Bildrotation verwendet wird.

Im Rahmen einer alternativen Ausgestaltung der optischen Anordnung zur Bildrotation könnte es sich dabei um eine Spiegelanordnung handeln, vorzugsweise um eine Anordnung mit einer ungeradzahligen Anzahl von Spiegeln, wie es bei dem "K"-Spiegel der Fall ist. Kompliziertere Ausgestaltungen sind hier denkbar, wobei zu berücksichtigen ist, daß sich bei zunehmender Spiegelanzahl die Lichtverluste erhöhen. Insoweit bietet sich eine Anordnung mit drei Spiegeln als vorteilhafte Ausgestaltung an.

In einer Alternative zur Erfindung hinsichtlich einer konkreten Lokalisierung der Anordnung zur Bildrotation ist es im Rahmen einer ganz besonders einfachen Ausgestaltung von Vorteil, wenn diese optische Anordnung im parallelen Strahlengang des konfokalen Scanmikroskops angeordnet ist. Im Konkreten könnte die optische Anordnung zur Bildrotation zwischen Tubuslinse und dem Objektiv angeordnet sein, nämlich im Unendlich-Strahlengang des konfokalen Scanmikroskops.

In einer anderen Alternative zur Erfindung wäre es jedoch auch denkbar, die optische Anordnung zur Bildrotation dem Okular bzw. der Tubuslinse nachzuordnen, wodurch sich geringe Anforderungen an die Winkelgenauigkeit der Anordnung ergeben. Im Rahmen einer solchen Ausgestaltung wäre die Anordnung zur Bildrotation leicht nachrüstbar. Nachteilig wäre hier sicherlich das Erfordernis einer synchronen Drehung beider Okulare.

Im Rahmen einer Ausgestaltungsmöglichkeit der Erfindung dient die optische Anordnung zur Bildrotation zum Drehen aller durch einen Laserscanner in das konfokale Scanmikroskop eingespeisten Scan- und Videobilder. Dazu ist die optische Anordnung zur Bildrotation zwischen einer Scanlinse und einem Scanspiegel eines Laserscanners angeordnet. Diese Ausgestaltung ist insoweit von Vorteil, als hier eine wesentlich kleinere Winkelempfindlichkeit vorliegt, wie sie bei einer Anordnung des Rotors zwischen Tubuslinse und Objektiv gegeben ist.

Zur Vermeidung von Interferenzen bei der Verwendung von kohärenten Lichtquellen könnte der Laserscanner feststehende, hinreichend dicke oder ausreichend keilförmige Strahlteiler aufweisen, so dass die internen Reflexionen der Originalstrahlen von den Originalstrahlen räumlich getrennt verlaufen. Dadurch werden Interferenzerscheinungen unterdrückt.

Des weiteren könnte zur Minimierung des Strahlversatzes bei der Rotation der Anordnung eine gesonderte Justiervorrichtung vorgesehen sein.

Schließlich ist in weiter vorteilhafter Weise ein axial bewegliches Objektiv bzw. ein axial beweglicher Objektivrevolver für die Aufnahme von z-Schnitten in beliebig orientierten Richtungen vorgesehen.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung werden auch im allgemeinen bevorzugte Ausgestaltungen und Weiterbildungen der Lehre erläutert. In der Zeichnung zeigt
- Fig. 1: in einer schematischen Seitenansicht ein erstes Alternativ beispiel eines erfindungsgemäßen konfokalen Scanmikroskops mit optischer Anordnung zur Bildrotation,
- Fig. 2: in einer schematischen Seitenansicht ein zweites Alternativ beispiel eines erfindungsgemäßen konfokalen Scanmikroskops mit optischer Anordnung zur Bildrotation,
- Fig. 3: in einer schematischen Seitenansicht ein Ausführungsbeispiel eines erfindungsgemäßen konfokalen Scanmikroskops mit optischer Anordnung zur Bildrotation.

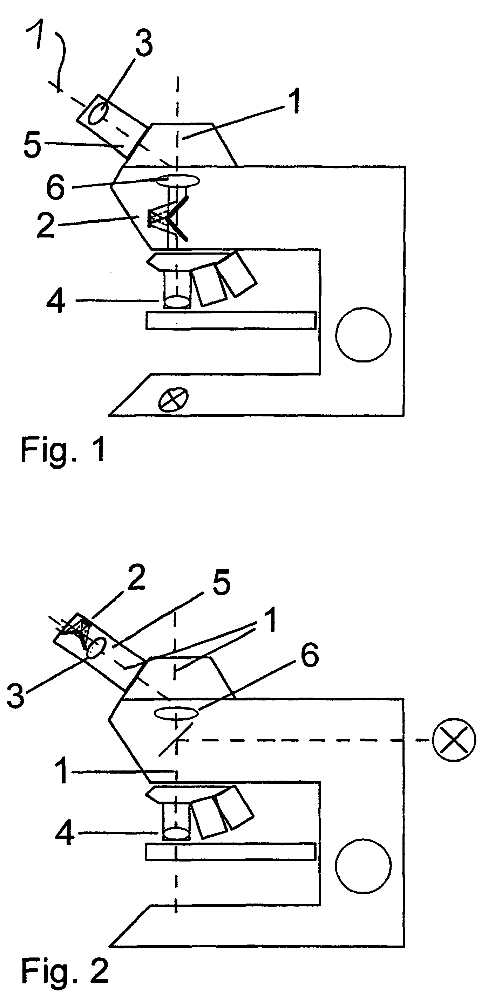

Fig. 1 zeigt ein erstes Alternativ beispiel eines konfokalen Scanmikroskops mit einer im Strahlgang 1 des konfokalen Scanmikroskops vorgesehenen Anordnung 2 zur Bildrotation.

Bei den in den Figuren dargestellten Ausführungsbeispielen handelt es sich bei der Anordnung 2 zur Bildrotation - der einfachen Darstellung halber - um einen "K"-Spiegel, der an unterschiedlichen Stellen im Strahlgang 1 des konfokalen Scanmikroskops angeordnet ist.

Bei der in Fig. 1 gezeigten Darstellung ist die Anordnung 2 zwischen der Tubuslinse 6 und dem Objektiv 4 angeordnet, wobei sich hieraus sicherlich ein Problem in der Nachrüstbarkeit ergibt.

Gemäß der Darstellung in Fig. 2 ist die Anordnung 2 zur Bildrotation dem Okular 3 bzw. der Tubuslinse 6 nachgeordnet. Insoweit ergeben sich wesentlich geringere Anforderungen an die Winkelgenauigkeit der Anordnung in Figur 1. Diese Anordnung ist im übrigen leicht nachrüstbar, wobei die hier erforderliche synchrone Drehung für beide Okulare 3 problematisch bzw. in der Handhabung des konfokalen Scanmikroskops nachteilig ist.

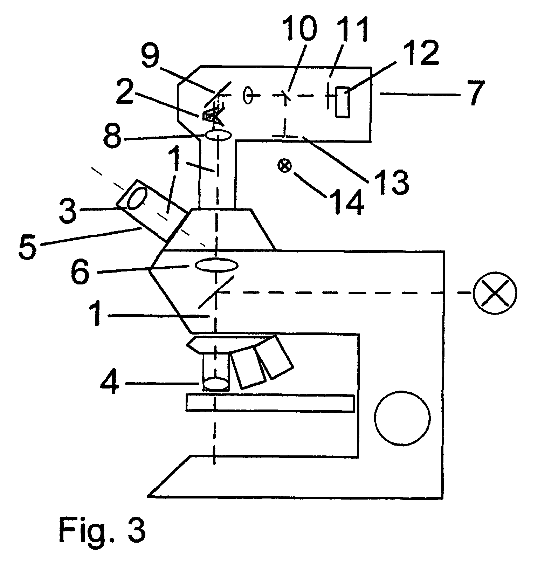

Bei dem in Fig. 3 dargestellten erfindungsgemäßen konfokalen Scanmikroskop dient die optische Anordnung 2 zur Bildrotation zum Drehen aller durch einen Laserscanner 7 in das konfokale Scanmikroskop eingespeisten Scan- und Videobilder. Im Konkreten ist die optische Anordnung 2 zur Bildrotation zwischen einer Scanlinse 8 und einem Scanspiegel 9 des Laserscanners 7 angeordnet.

Hinsichtlich weiterer Ausführungen einerseits einer konkreten Ausgestaltung der Anordnung 2 zur Bildrotation und andererseits hinsichtlich weiterer Maßnahmen betreffend die Justage zur Minimierung der Strahlversatzes oder betreffend eine axiale Beweglichkeit des Objektivs bzw. des Objektivrevolvers wird zur Vermeidung von Wiederholungen auf den allgemeinen Teil der Beschreibung verwiesen.

Abschließend sei ganz besonders hervorgehoben, dass die voranstehend erörterten Ausführungsbeispiele zum Verständnis der hier beanspruchten Lehre dienen, diese jedoch nicht auf die Ausführungsbeispiele einschränken.

### Bezugszeichenliste

- 1: Strahlengang
- 2: Anordnung zur Bildrotation ("K"-Spiegel)
- 3: Okular
- 4: Objektiv
- 5: Okulargehäuse
- 6: Tubuslinse
- 7: Laserscanner:
10 Strahlteiler
11 Detektionspinhole
12 Detektor
13 Anregungspinhole
14 Lichtquelle
- 8: Scanlinse (des Laserscanners)
- 9: Scanspiegel (des Laserscanners)

## Patentansprüche

1. Konfokales Scanmikroskop mit einer im Strahlengang (1) des konfokalen Scanmikroskops angeordneten optischen Anordnung (2) zur Bildrotation, **dadurch gekennzeichnet, dass** die optische Anordnung (2) zwischen einer Scanlinse (8) und einem Scanspiegel (9) im parallelen Strahlengang (1) des konfokalen Scanmikroskops angeordnet ist.

2. Konfokales Scanmikroskop nach Anspruch 1, **dadurch gekennzeichnet, dass** es sich bei der optischen Anordnung (2) zur Bildrotation um ein Prisma handelt.

3. Konfokales Scanmikroskop nach Anspruch 2, **dadurch gekennzeichnet, dass** das Prisma als Dove-Prisma ausgeführt ist.

4. Konfokales Scanmikroskop nach Anspruch 2, **dadurch gekennzeichnet, dass** das Prisma als Abbe-Prisma ausgeführt ist.

5. Konfokales Scanmikroskop nach Anspruch 1, **dadurch gekennzeichnet, dass** es sich bei der optischen Anordnung (2) zur Bildrotation um eine Spiegelanordnung handelt.

6. Konfokales Scanmikroskop nach Anspruch 5, **dadurch gekennzeichnet, dass** es sich bei der Spiegelanordnung um eine Anordnung mit einer ungeradzahligen Anzahl von Spiegeln handelt.

7. Konfokales Scanmikroskop nach Anspruch 5 oder 6, **dadurch gekennzeichnet, dass** die Spiegelanordnung als "K"-Spiegel ausgeführt ist

8. Konfokales Scanmikroskop nach einem der Ansprüche 1 bis 7, **dadurch gekennzeichnet, dass** die optische Anordnung (2) zur Bildrotation zum Drehen aller durch eine Strahlvereinigungsoptik (7) in das Mikroskop eingespeiste Scan- und Videobilder dient.

9. Konfokales Scanmikroskop nach einem der Anspruche 1 bis 8, **dadurch gekennzeichnet, dass** die Strahlvereinigungsoptik (7) feststehende dicke Strahlteiler zur Vermeidung von Interferenzen umfasst.

10. Konfokales Scanmikroskop nach einem der Anspruche 1 bis 9, **dadurch gekennzeichnet, dass** eine Justiervorrichtung zur Minimierung des Strahlversatzes bei der Rotation vorgesehen ist.

11. Konfokales Scanmikroskop nach einem der Anspruche 1 bis 10, **dadurch gekennzeichnet, dass** ein axial bewegliches Objektiv bzw. ein axial beweglicher Objektivrevolver für die Aufnahme von z-Schnitten in beliebig orientierten Richtungen vorgesehen ist

## Claims

1. Confocal scanning microscope, with an optical arrangement (2) for image rotation being provided in the beam path (1) of the confocal scanning microscope, **characterized in that**, said optical arrangement (2) is arranged between the scanning lens (8) and the scanning mirror (9) in the parallel beam path (1) of the confocal scanning microscope

2. Confocal scanning microscope according to Claim 1, **characterized in that** the optical arrangement (2) for image rotation is a prism.

3. Confocal scanning microscope according to Claim 2, **characterized in that** the prism is designed as a Dove prism.

4. Confocal scanning microscope according to Claim 2, **characterized in that** the prism is designed as an Abbe prism.

5. Confocal scanning microscope according to Claim 1, **characterized in that** the optical arrangement (2) for image rotation is a mirror arrangement.

6. Confocal scanning microscope according to Claim 5, **characterized in that** the mirror arrangement is an arrangement with an odd number of mirrors.

7. Confocal scanning microscope according to Claim 5 or 6, **characterized in that** the mirror arrangement is designed as a "K"-mirror.

8. Confocal scanning microscope according to one of Claims 1 to 7, **characterized in that** the optical arrangement (2) for image rotation serves for rotating all the scanned and video images fed into the microscope by a beam combining optic.

9. Confocal scanning microscope according one of the Claims 1 to 8, **characterized in that** the beam combing optic comprises stationary beam splitters which are sufficiently thick for the purpose of avoiding interference.

10. Confocal scanning microscope according to one of Claims 1 to 9, **characterized in that** an adjusting apparatus is provided for the purpose of minimizing the beam offset during rotation.

11. Confocal scanning microscope according to one of Claims 1 to 10, **characterized in that** an axially moveable objective or an axially moveable objective turret is provided for taking z-sections in arbitrarily oriented directions.

## Revendications

1. Microscope confocal à balayage avec un dispositif optique (2) pour la rotation de l'image, disposé sur le trajet des rayons (1) du microscope confocal à balayage,
**caractérisé en ce que** le dispositif optique (2) est disposé entre une lentille de balayage (8) et un miroir de balayage (9) sur le trajet parallèle des rayons (1) du microscope confocal à balayage.

2. Microscope confocal à balayage selon la revendication 1, **caractérisé en ce que** le dispositif optique (2) pour la rotation de l'image est un prisme.

3. Microscope confocal à balayage selon la revendication 2, **caractérisé en ce que** le prisme est réalisé sous la forme d'un prisme Dove.

4. Microscope confocal à balayage selon la revendication 2, **caractérisé en ce que** le prisme est réalisé sous la forme d'un prisme Abbe.

5. Microscope confocal à balayage selon la revendication 1, **caractérisé en ce que** le dispositif optique (2) pour la rotation de l'image est un dispositif à miroirs.

6. Microscope confocal à balayage selon la revendication 5, **caractérisé en ce que** le dispositif à miroirs est constitué par un dispositif avec un nombre impair de miroirs.

7. Microscope confocal à balayage selon la revendication 5 ou 6, **caractérisé en ce que** le dispositif à miroirs est réalisé sous la forme d'un miroir en "K".

8. Microscope confocal à balayage selon une des revendications 1 à 7, **caractérisé en ce que** le dispositif optique (2) pour la rotation de l'image sert à faire tourner toutes les images de balayage et vidéo alimentant le microscope par l'intermédiaire d'une optique de regroupement des rayons (7).

9. Microscope confocal à balayage selon une des revendications 1 à 8, **caractérisé en ce que** l'optique de regroupement des rayons (7) comporte des séparateurs de rayons épais fixes pour éviter les interférences.

10. Microscope confocal à balayage selon une des revendications 1 à 9, **caractérisé en ce qu'**un équipement de réglage est prévu pour minimiser le déplacement des rayons lors de la rotation.

11. Microscope confocal à balayage selon une des revendications 1 à 10, **caractérisé en ce qu'**un objectif mobile dans le sens axial, respectivement un barillet d'objectifs mobile dans le sens axial est prévu pour l'enregistrement de coupes en z dans des directions d'orientation quelconque.
